# EUROPÄISCHE PATENTSCHRIFT

(11) **EP 2 432 693 B1**
(45) Veröffentlichungstag und Bekanntmachung des Hinweises auf die Patenterteilung: **20.11.2013**
(21) Anmeldenummer: 10720764.9
(22) Anmeldetag: 17.05.2010
(51) Int. Cl.: B64F 1/20, F03D 11/00, F03D 11/04

(54) **BAUWERK MIT EINER FLUGHINDERNISBEFEUERUNG UND VERFAHREN ZUR STEUERUNG DER FLUGHINDERNISBEFEUERUNG**
CONSTRUCTION WITH AN OBSTRUCTION LIGHT AND METHOD FOR CONTROLLING THE OBTRUCTION LIGHT
CONSTRUCTION AVEC UN FEUX D'OBSTACLE ET PROCEDE DE COMMANDE DU FEUX D'OBSTACLE

(30) Priorität: 20.05.2009 DE 102009026407
(43) Veröffentlichungstag der Anmeldung: 28.03.2012
(73) Patentinhaber: Wobben Properties GmbH, 26605 Aurich (DE)
(72) Erfinder: HARMS, Stephan, 26605 Aurich (DE); MÖLLER, Gerd, 28195 Bremen (DE); SCHWEIZER, Werner, 25899 Klixbüll (DE)
(74) Vertreter: Eisenführ, Speiser & Partner
(86) Internationale Anmeldenummer: PCT/EP2010/056724
(87) Internationale Veröffentlichungsnummer: WO 2010/133541

(56) Entgegenhaltungen:
- WO-A1-2006/092137
- DE-A1-102006 007 536
- DE-U1-202004 006 595
- DE-U1-202005 019 193

## Beschreibung

Die vorliegende Erfindung betrifft ein Verfahren zur Steuerung einer Flughindernisbefeuerung und ein Bauwerk mit einer Flughindernisbefeuerung, bei welchen ein Empfänger mit einer Schalteinrichtung für die Flughindernisbefeuerung zusammenwirkt. Außerdem betrifft die Erfindung ein System zur Steuerung einer Flughindernisbefeuerung.

Aus der DE 20 2005 019 193 U1, die als nächstliegender Stand der Technik betrachtet wird, ist ein System zur Steuerung von Hindernisbefeuerungen durch Mode-S-Transpondersignale bekannt.

Aus der DE 10 2006 007 536 A1 ist eine Windenergieanlage mit einer Flugbefeuerungseinrichtung bekannt, bei welcher sich die Flugbefeuerungseinrichtung erst dann einschaltet, wenn sich ein Fahrzeug, vorzugsweise ein Flugzeug, der Windenergieanlage bis auf einen vorbestimmten Abstand nähert.

Außerdem ist es auf dem Gebiet der Flughinderniskennzeichnung bekannt, insbesondere Leuchten für die Befeuerung redundant vorzusehen, damit das Flughindernis auch beim Ausfall einer Leuchte immer noch als Flughindernis gekennzeichnet und entsprechend wahrnehmbar ist.

Flughindernisbefeuerungen dienen der Flugsicherheit, um die Führer von Luftfahrzeugen rechtzeitig auf Flughindernisse aufmerksam zu machen. Deshalb spielt insbesondere der Aspekt der Sicherheit, auch beim Betrieb von Flughindernisbefeuerungen eine überragende Rolle.

Aufgabe der vorliegenden Erfindung ist es, die Betriebssicherheit von Flughindernisbefeuerungen weiter zu verbessern. Diese Aufgabe wird durch die Merkmale der Ansprüche 1 und 8 gelöst.

Dazu wird das eingangs genannte Verfahren zur Steuerung einer Flughindernisbefeuerung derart weitergebildet, dass der Empfänger bei Empfang eines ersten vorgegebenen Signals die Schalteinrichtung derart steuert, dass die Flughindernisbefeuerung ausgeschaltet ist. Solange also der Empfänger das erste vorgegebene Signal empfängt (und einwandfrei erkennt und auswertet), ist die Annahme gerechtfertigt, dass alle Komponenten einwandfrei funktionieren und etwaige Steuerungssignale vom Empfänger erfasst und ausgewertet werden können.

Dabei liegt der vorliegenden Erfindung die Erkenntnis zu Grunde, dass selbst redundant ausgeführte Leuchten nicht jede Art von Fehlfunktion ausgleichen können, sondern dass eine dauerhafte Überwachung und eine automatische Reaktion auf Störungen in der Steuerung der Flughindernisbefeuerung mit einer Einschaltung der Flughindernisbefeuerung jedenfalls die gänzlich unerwünschte Situation sicher vermeiden kann, dass eine Flughindernisbefeuerüng eigentlich eingeschaltet sein sollte, dies aber wegen einer nicht erkannten Störung nicht ist.

In einer bevorzugten Weiterbildung ist das Verfahren dadurch gekennzeichnet, dass bei einer Störung des ersten vorbestimmten Signals die Flughindernisbefeuerung eingeschaltet wird. Wenn also das erste vorbestimmte Signal nicht mehr ausgesendet wird oder wenn der Empfänger dieses Signal nicht mehr einwandfrei empfängt (und ebenso einwandfrei erkennt und auswertet), dann liegt eine Störung vor und allein um die Flugsicherheit auch im Fall einer Störung zu gewährleisten, wird deshalb die Flughindernisbefeuerung durch die Schalteinrichtung eingeschaltet.

Besonders bevorzugt ist das Verfahren dadurch gekennzeichnet, dass bei Empfang eines zweiten vorgegebenen Signals die Flughindernisbefeuerung eingeschaltet wird. Auf diese Weise lässt sich empfängerseitig eine gezielte Einschaltung der Flughindernisbefeuerung durch ein entsprechendes Steuerungssignal von einer vorsorglichen Einschaltung wegen einer Störung unterscheiden und entsprechende Mitteilungen können über geeignete Kommunikationskanäle angezeigt werden.

Um eine effektive Steuerung der Flughindernisbefeuerung aller Bauwerke in einem großen Gebiet wie z. B. einem Staat, einem Bundesland o. ä. zu ermöglichen, ist das erfindungsgemäße Verfahren dadurch gekennzeichnet, dass eine zentrale Leitstelle unter Vermittlung von Zwischenstationen an eine Mehrzahl von Sendestationen vorgegebene Signale übermitteln kann, welche die Sendestationen zur Aussendung vorbestimmter Signale veranlassen. So können durch eine derartige Netztopologie von einer zentralen Leitstelle aus die Flughindernisbefeuerungen gesteuert werden.

Dabei kann es erwünscht sein, in einem bestimmten Bereich oder entlang einer bestimmten Route die Flughindernisbefeuerungen gezielt einschalten zu können, z. B. wenn ein Luftfahrzeug nicht selbst eine Einschaltung der Flughindernisbefeuerungen auf seiner Route durch einen Transponder bewirken kann, sei es, weil der Transponder nicht vorhandeln oder weil er ausgefallen ist. Sobald dies der zentralen Leitstelle bekannt geworden ist, kann diese die Flughindernisbefeuerungen in z. B. in dem Gebiet, in dem das Luftfahrzeug unterwegs ist, oder entlang der Route, die das Luftfahrzeug befliegt, einschalten, wenn die Mehrzahl der Sendestationen alle vorhandenen Sendestationen oder nach vorgebbaren Kriterien auswählbare Sendestationen umfasst.

Um auch die einwandfreie Funktion der zentralen Leitstelle überwachen zu können und um auch bei einer Störung der zentralen Leitstelle auf jeden Fall die Flugsicherheit nicht zu gefährden, wird gemäß einer bevorzugten Weiterbildung des Verfahrens veranlasst eine Störung des Signals der zentralen Leitstelle die Zwischenstationen, ein Signal zu den Sendestationen zu übertragen, das eine Abschaltung der Sendestationen oder eine Aussendung des zweiten vorgegebenen Signals bewirkt.

Eine einwandfreie Funktion der Zwischenstationen kann wiederum vorteilhaft dadurch überwacht werden, dass bei einer Störung des Signals einer Zwischenstation die dieser Zwischenstation zugeordneten Sendestationen abgeschaltet werden oder das zweite vorgegebene Signal aussenden.

Zur Verbesserung der Flugsicherheit ist das Bauwerk der eingangs genannten Art gekennzeichnet durch eine Ansteuerung der Schalteinrichtung derart, dass bei Empfang eines ersten vorgegebenen Signals durch den Empfänger die Schalteinrichtung die Flughindernisbefeuerung ausschaltet. Durch diese Funktion kann sichergestellt werden, dass die Flughindernisbefeuerung nur dann ausgeschaltet ist, wenn sie durch ein entsprechendes Signal auch eingeschaltet werden kann. Oder anders ausgedrückt, wenn die dafür erforderlichen Einrichtungen die Empfänger und Schalteinrichtung einwandfrei arbeiten.

In einer bevorzugten Weiterbildung ist das Bauwerk gekennzeichnet durch eine Ansteuerung der Schalteinrichtung derart, dass bei Störung des ersten vorgegebenen Signals die Schalteinrichtung die Flughindernisbefeuerung einschaltet. So kann unabhängig von der Art der Störung und der Störungsursache sichergestellt werden, dass auf jeden Fall die Flughindernisbefeuerung vorsorglich eingeschaltet ist, wenn eine Fehlfunktion aufgetreten sein kann. Oder anders ausgedrückt, dass die Flughindernisbefeuerung auf keinen Fall ausgeschaltet ist, wenn sie nicht sicher ausgeschaltet sein kann.

Um gezielt in einem bestimmten Bereich oder entlang einer bestimmten Route die Flughindernisbefeuerungen einschalten zu können, ist das Bauwerk weitergebildet durch eine Ansteuerung der Schalteinrichtung derart, dass bei Empfang eines zweiten vorgegebenen Signals durch den Empfänger die Schalteinrichtung die Flughindernisbefeuerung einschaltet.

In einer besonders bevorzugten Ausführungsform der vorliegenden Erfindung ist das Bauwerk gekennzeichnet durch eine Ausbildung als Windenergieanlage.

Erfindungsgemäß ist das eingangs genannte System zur Steuerung einer Flughindernisbefeuerung gekennzeichnet durch eine zentrale Leitstelle, mehrere Zwischenstationen sowie eine Vielzahl von Sendeeinrichtungen, wobei die Sendeeinrichtungen unter Vermittlung der Zwischenstationen mit der zentralen Leitstelle verbunden sind und wobei die zentrale Leitstelle ständig ein Leitstellensignal aussendet, dass von den Zwischenstationen empfangen wird und wobei die Zwischenstationen ständig ein erstes vorgegebenes Signal aussenden, solange sie das Leitstellensignal empfangen.

Die erfindungsgemäße Lösung definiert ein Backup-System für die Infrastruktur der Flughindernisbefeuerung.

Eine fehlende Signalabgabe seitens eines Luftfahrzeuges führt nämlich dazu, dass dieses Luftfahrzeug die Hindernisbefeuerung nicht aktiviert, wenn die Aktivierung der Hindernisbefeuerung den Empfang einer bestimmten Signalabgabe seitens des Flugzeugs voraussetzt.

Eine sichere Backup-Lösung für einen Transponder aus einem Luftfahrzeug ist ein redundanter Transponder. Die vorliegende Anmeldung beschreibt aber nicht die Transponderredundanz im Luftfahrzeug, sondern ein Backup-System, welches hiervon verschieden ist.

So ist beispielsweise davon auszugehen, dass alle Flugzeuge in einem bestimmten Luftraum auch der Flugüberwachung (z.B. mittels Radar) unterliegen und von dieser erfasst werden und wenn dann die Flugüberwachung - dort z.B. die Fluglotsen - erkennen, dass bei einem Luftfahrzeug ein Transponder ausgefallen ist oder dieses Flugzeug über gar keinen Transponder verfügt, leitet regelmäßig die Flugüberwachung Maßnahmen ein, die dazu führen, dass die Hindernisbefeuerung - falls notwendig - aktiviert wird.

In Reichweite von Windenergieanlagen ist daher erfindungsgemäß ein Gerät zu installieren, das z.B. auf 1090 MHz ein Mode-S-Transpondersignal (Prüfsignal, z.B. DF17) sendet. Diese Sender können beispielsweise auch auf Windenergieanlagen selbst installiert werden. Dieses Signal beinhaltet neben einer identifizierbaren Kennung und einer Positionseingabe - beispielsweise Nordpol-Koordinaten - eine Höheninformation und wird in der Größenordnung etwa einmal pro Sekunde in einem festen Intervall gesendet.

Auch kann das Signal eine Positionsangabe wie z.B. "Nordpol" enthalten, ohne jede Höheninformation.

Ein Empfänger ist in der Lage, dieses Signal zu empfangen und auszuwerten, so dass der Empfänger beispielsweise feststellen kann, woher das Signal kommt und welche Höheninformation oder Ortsinformation das Signal beinhaltet.

Der beschriebene Sender kann nun erfindungsgemäß beispielsweise stets ein Transpondersignal aussenden, welches eine Höheninformation von 30000 ft beinhaltet.

Wird ein solches Signal vom Empfänger empfangen und ausgewertet, so wird die Höhe von 30000 ft als nicht relevant eingestuft und führt erfindungsgemäß eben nicht zur Aktivierung der Befeuerung, sondern die Befeuerung bleibt ausgeschaltet. Die Sendung des Signals mit der Höheninformation von z.B. 30000 ft wird auch dann ausgesendet, wenn von der/den Flugleitung/Fluglotsen keine Maßnahmen bezüglich eines Transponderfalls eingeleitet wurden und die permanente Prüfung der Verbindung zwischen dem Gerät und dem Fluglotsen positiv ausfällt.

Der Transpondersignalempfänger in der Windenergieanlage/Windpark prüft nun den vorgeschriebenen z.B. sekündlichen Eingang des Prüfsignals, also des DF17-Signals mit der Höheninformation von 30000 ft. Wird das Signal empfangen und kann die Höheninformation von 30000 ft zutreffend ausgewertet werden, bleibt es bei der Abschaltung der Hindernisbefeuerung. Die Hindernisbefeuerung wird jedoch aktiviert, wenn das Signal ausfällt, wobei ein Signalausfall nicht nur bedeuten kann, dass das Signal als solches physikalisch ganz ausfällt; sondern ein Ausfall kann auch bedeuten, dass das Signal so gestört ist, dass nicht mehr die Höheninformation von 30000 ft und/oder die vorbestimmte Positionsinformation auswertbar ist.

Im Falle eines Transporiderausfalls eines Flugzeugs, was von der Flugleitstelle oder Fluglotsen erkannt wird, aktiviert also die/der Flugleitstelle/Fluglotse ein weiteres Signal und aktiviert damit einen oder definiert (z.B. je nach Luft- und Bodenraum) viele Sender, um in begrenzten Gebieten oder kompletten Regionen die Befeuerung auf Windenergieanlagen anzuschalten. Das von dem einen oder vielen Sendern ausgesendete Transponderprüfsignal beinhaltet dann die Höheninformation 100 ft, und weil diese Höhe beim Empfang als relevant eingestuft wird, führt dies zur Aktivierung der Befeuerung.

Grundsätzlich gibt es dann wenigstens zwei Alternativen:
In der ersten Alternative wird dann, wenn die Aussendung eines Prüfsignals mit der Höheninformation z.B. 100 ft ausgesendet wird, die Aussendung des Prüfsignals mit der Höheninformation von 30000 ft unterdrückt.

Eine andere Möglichkeit ist die, dass zugelassen wird, dass zusätzlich zum Aussenden bzw. zum Empfangen der Höheninformation 30000 ft das zweite Signal ausgesendet wird bzw. auch empfangbar ist, also das zweite Signal mit der Höheninformation von z.B. 100 ft. Empfängt nun der Transponderempfänger einer Windenergleanlage beide Signale, so führt dies zur Aktivierung der Hindernisbefeuerung der Windenergieanlage, weil immer dann, wenn der Empfänger der Windenergieanlage ein Prüfsignal empfängt, welches eine Höheninformation enthält, die deutlich unter 30000 ft liegt (oder die vorbestimmte Positionsinformation abweicht), die Hindernisbefeuerung eingeschaltet wird und zwar auch dann, wenn gleichwohl von einem anderen Sender eine Höheninformation mit dem Inhalt 30000 ft empfangen wird.

Die Hindernisbefeuerung wird also nur dann ausgeschaltet, wenn kein anderes Prüfsignal empfangen wird, welches eine Höheninformation enthält, z.B. von 30000 ft, die sicher eine Kollision zwischen einem Luftfahrzeug und einer Windenergieanlage ausschließt.

Wenn nun das Prüfsignal mit der Höheninformation 30000 ft ausfällt, führt dies zur (sofortigen) Einschaltung der Hindernisbefeuerung.

Auch wird die Hindernisbefeuerung der Windenergieanlage eingeschaltet, wenn es keine ausreichende Verbindung zwischen dem Prüfsignalsender (der das Prüfsignal der Höheninformation 30000 ft sendet) und der/dem Flugleitstelle/Fluglotsen gibt oder keine ausreichende Verbindung zwischen dem Transpondersignalempfänger in der Windenergieanlage und dem Prüfsignalsender gibt oder - wie bereits erwähnt - der Transportsignalempfänger in der Windenergieanlage ein Signal empfängt, welches eine Höheninformation aufweist, welche deutlich unterhalb von 30000 ft liegt, z.B. 100 ft.

Falls es Einwände gegen die Nutzung des 1090 MHz Frequenzsignals gibt, lassen sich die vorerwähnten Prüfsighale auch direkt mittels UMTS/GPRS oder alternativ über das Internet oder andere Übertragungsverfahren zu den Empfängern der Windenergieanlage übermitteln.

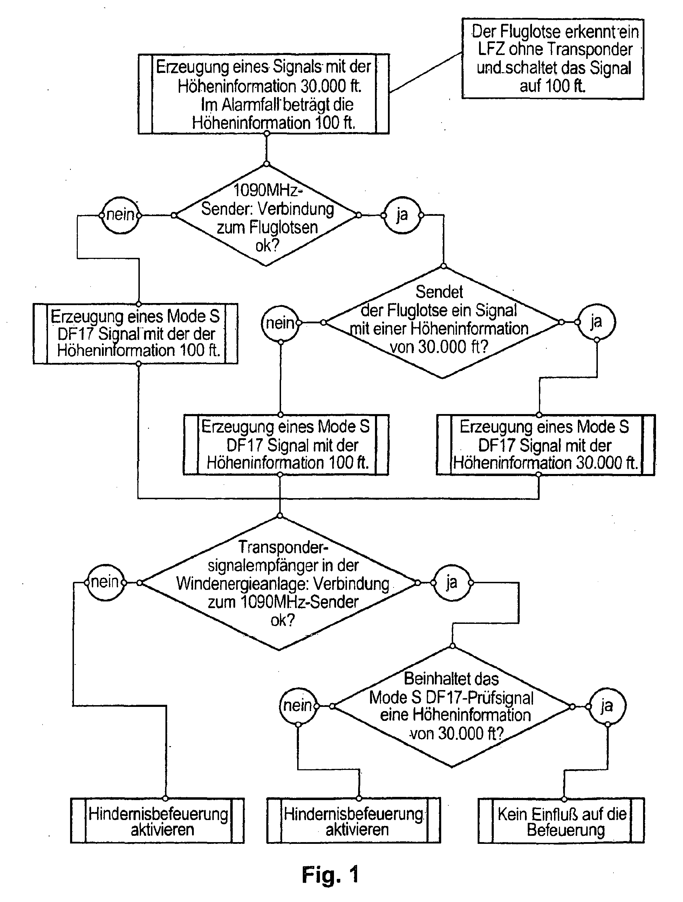

Das erfindungsgemäße Backup-System für den Ausfall eines Transponders im Luftfahrzeug ist anhand Fig. 1 dargestellt.

Die dort genannte Höheninformation von 30000 ft steht sinngemäß für alle diejenigen Höheninformationen, bei denen eine Kollision zwischen dem Luftfahrzeug und einer Windenergieanlage sicher ausgeschlossen werden kann.

Eine Höheninformation von 100 ft hingegen steht sinngemäß für eine Höheninformation, bei der eine Kollision zwischen einer Windenergieanlage und einem Flugzeug eben nicht ausgeschlossen werden kann.

Da Windenergieanlagen mittlerweile auch Höhen aufweisen, die 200 m und höher liegen, so dass also auch bei dem Eingang eines Signals, welches eine Höheninformation von 250 m beinhaltet, die Hindernisbefeuerung aktiviert wird; die Aktivierung einer Hindernisbefeuerung jedoch ausbleibt, wenn ein Signal empfangen wird, welches die Höheninformation von mehr als 1000 bis 2000 m beinhaltet.

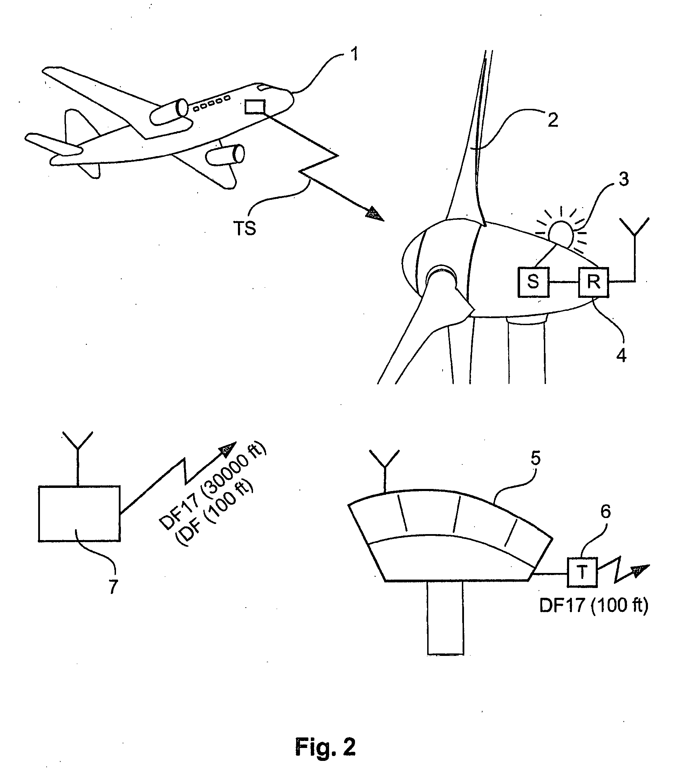

Fig. 2 veranschaulicht noch einmal bildlich ein Ausführungsbeispiel der Erfindung.

Nähert sich ein Flugzeug 1 einer Windenergieanlage 2 und unterschreitet dabei die Flughöhe des Flugzeugs eine vorbestimmte Höhe, so muss eine Hindernisbefeuerung 3 der Windenergieanlage 2 eingeschaltet werden, falls dies gemäß den Vorschriften festgelegt ist.

Die Einschaltung der Hindernisbefeuerung 3 kann durch ein Transpondersignal TS des Flugzeugs ausgelöst werden, wenn dieses Signal von einem Empfänger 4 der Windenergieanlage empfangen und ausgewertet wird und dabei vor allem eine Höheninformation feststellbar ist, die die Aktivierung der Hindernisbefeuerung zur Folge hat.

ist das Flugzeug nicht in der Lage das gewünschte Transpondersignal TS auszusenden - aus welchen Gründen auch immer -, ist damit auch eine Aktivierung der Hindernisbefeuerung insofern erst einmal nicht möglich, weil der Empfänger 4 der Windenergieanlage kein entsprechendes Aktivierungssignal empfängt.

Falls nun eine Flugleitstelle 5 feststellt, dass sich in dem Luftraum ein Flugzeug 1 befindet - hierzu verwenden die Flugleitstellen regelmäßig Radar oder andere Überwachungseinrichtungen - und das Flugzeug eben kein Transpondersignal TS aussendet, gleichwohl jedoch das Flugzeug eine bestimmte Höhe unterschritten hat, kann die Flugleitstelle 5 über eine Sendeeinrichten 6 ein entsprechendes Signal senden, z.B. DF17-100 ft, so wird selbstverständlich dann die Hindernisbefeuerung 3 der Windenergieanlage 2 aktiviert, wenn dieses Signal vom Empfänger 4 der Windenergieanlage 2 empfangen wird.

Dieses Signal DF17-100 ft der Flugüberwachung 5 kann aber auch von einer weiteren Empfangs-/Sendestation 7 ausgesendet werden, wenn die Aussendung durch die Flugüberwachung 5 veranlasst wurde. Diese Lösung ist insbesondere dann zu bevorzugen, wenn die Flugüberwachung 5 außerhalb der Funkreichbreite zur Windenergieanlage angeordnet ist, die Empfangs-/Sendestation 7 jedoch in Funkreichweite zur Windenergieanlage angeordnet ist.

Diese Empfangs-/Sendestation wird so ausgebildet, dass sie wiederkehrend, z.B. pro Sekunde einmal ein Signal DF17-30000 ft aussendet. Wird dieses Signal - und nur dieses Signal - vom Empfänger 4 der Windenergieanlage 2 empfangen, so bleibt die Hindernisbefeuerung ausgeschaltet.

Ist nun die Empfangs-liendestation in irgendeiner Weise ausgefallen oder beschädigt, jedenfalls nicht mehr in der Lage, das Signal DF17-30000 ft auszusenden, so wird dies durch Empfänger 4 bzw. der nachgeschalteten Auswerteeinrichtung (nicht dargestellt) der Windenergieanlage 2 registriert und führt automatisch zur Aktivierung der Hindernisbefeuerung 3.

Auch wird die Hindernisbefeuerung 3 der Windenergieanlage 2 aktiviert, falls zusätzlich zu dem DF17-30000 ft-Signal ein weiteres Signal, z.B. DF17-100 ft, empfangen wird.

Falls nun von der Flugleitstelle festgestellt werden sollte, dass die eigene Sendeeinrichtung 6 - aus welchen Gründen auch immer - gestört, defekt, ausgefallen o.dgl. ist, ist es dann, wenn die Flugleitstelle 5 in irgendeiner anderen Art und Weise elektrisch oder fernmeldetechnisch mit der Sendestation 7 verbunden ist, möglich, die gesamte Fernmeidestation 7 abzuschalten, so dass durch das Wegbleiben des Signals DF17-30000 ft automatisch auch die Hindernisbefeuerung 3 aktiviert wird.

Wie erwähnt, weist die Windenergieanlage eine Empfangseinrichtung mit einer nachgeschalteten Auswerte- und Schalteinrichtung auf, so dass dann, wenn das zu empfangene Soll-Signal, z.B. DF17-30000 ft ausbleibt, dies in der Auswerteeinrichtung festgestellt wird und dies zur Aktivierung eines Schaltsignals führt, welches dann die Hindernisbefeuerung aktiviert. Diese Aktivierung findet auch dann statt, wenn das erwähnte Soll-Signal DF17-30000 ft korrekt empfangen wird, jedoch die Auswerteeinrichtung defekt ist, so dass am Ausgang der Auswerteeinrichtung (dies kann eine elektrische Schaltung sein) ein Signal anliegt, welches von der Schalteinrichtung nicht mehr als Hindernisbefeuerung-Ausschaltsignal interpretiert wird, sondern als Hindernisbefeuerung-Einschaltsignal.

Wie erwähnt, kann auch die Flugleitstelle in der Lage sein, ein entsprechendes DF17-Signal zu generieren, welches dann zur Empfangs-Sendestation 7 gesendet wird, um von dort aus weiter an die Windenergieanlage bzw. deren Empfänger weiter gesendet zu werden.

Die Überwachungsstruktur, die zwischen dieser Empfangs-/Sendestation 7 und der Windenergieanlage 2 eingerichtet ist, also Aktivierung der Hindernisbefeuerung bei Ausbleiben des DF17-30000 ft-Signals, kann auch zwischen der Flugleitstelle 5 und der Empfangs-/Sendestation 7 eingerichtet werden und zwar dergestalt, dass dann, wenn die Empfangs-/Sendestation 7 von der Flugleitstelle 5 innerhalb eines bestimmten Zeitraums, z.B. 1 Sekunde oder 10 Sekunden o.dgl., kein Signal empfängt, automatisch die Aussendung des DF17-30000 ft-Signals unterdrückt wird und/oder die Aussendung eines DF17-100 ft-Signals aktiviert wird. Ist also die Sendeeinrichtung in der Flugleitstelle defekt o.dgl., führt dies - wie erwähnt - automatisch auch zur Aktivierung der Hindernisbefeuerungen, die mit der Empfangs-/Sendestation 7 in der beschriebenen Weise zusammenwirken.

Eine bevorzugte Ergänzung der vorstehenden erfindungsgemäßen Lösung, aber auch gleichzeitig eine eigenständige erfindungsgemäße Variante der Erfindung besteht darin, dass die Hindernisbefeuerung (Tagbefeuerung weiß oder Nachtbefeuerung rot) immer aktiviert wird - also auch unabhängig vom Empfang irgendeines DF17-Signals -, wenn die Windenergieanlage betreten wird, sei es von Besuchern oder vom Servicepersonal. Diese Aktivierung kann dadurch ausgelöst werden, indem eine Tür der Windenergieanlage, über die man sich Zutritt zur Windenergieanlage beschaffen kann, mit einem Schalter verbunden ist, welcher die Hindernisbefeuerung aktiviert, wenn die Tür geöffnet wird und die Hindernisbefeuerung beim Schließen der Tür oder einen vorbestimmten Zeitraum danach wieder deaktiviert, es sei denn, dass der vorbeschriebene Fall der Aktivierung der Windenergleanlage vorliegt, z.B. Ausbleiben des DF17-30000 ft-Signals.

Die vorbeschriebene auch eigenständig einzusetzende Variante hat den Vorteil, dass die Personen, die sich in der Windenergieanlage aufhalten, sich noch sicherer dort aufhalten können als bisher: Auch ist somit von Weitem her erkenntlich, an welcher Windenergieanlage Servicedienstleistungen erbracht werden.

Soweit in der vorliegenden Anmeldung ein DF17-Signal mit einer besonderen Höheninformation, z.B. 30000 Fuß, beschrieben wird, welches bei Empfang durch den Transpondersignalempfänger einer Windenergieanlage eines Windparks dafür sorgt, dass die Hindernisbefeuerung ausgeschaltet wird, sei klargestellt, dass ein solches Ausschaltsignal auch dann erfolgt, wenn statt einer Höheninformation z.B von 30000 Fuß eine Ortsinformation, z.B. "Nordpol" oder "Südpol", eingegeben wird und diese vom Transpondersignalempfänger empfangen und ausgewertet wird. Bei einer solchen Ortsinformation z.B. "Nordpol" oder "Südpol" weiß der Empfänger, dass dies ein Ort ist, der sehr weit weg ist und somit keine Kollisionsgefahr besteht. Statt einer solchen maximal weit weg liegenden Information wie Nordpol oder Südpol können natürlich auch andere Ortsinformationen eingegeben werden, bei denen sicher ist, dass keine Kollision zu befürchten ist.

## Patentansprüche

1. Verfahren zur Steuerung einer Flughindernisbefeuerung (3), wobei ein Empfänger (4) mit einer schalteinrichtung (S) für die Flughindernisbefeuerung (3) zusammenwirkt,
**dadurch gekennzeichnet, dass** der Empfänger (4) bei Empfang eines ersten vorgegebenen Signals (DF17-Mode-S-Transpondersignals) die Schalteinrichtung derart steuert, dass die Flughindernisbefeuerung (3) ausgeschaltet ist, wobei das erste Signal (DF17-Mode-S-Transpondersignal) eine Höhen- und/oder Ortsinformation beinhaltet, bei der eine Kollision zwischen einem Flugzeug und einer Windenergieanlage sicher ausgeschlossen ist.

2. Verfahren nach Anspruch 1, **dadurch gekennzeichnet, dass** bei einer Störung, einem Ausbleiben oder einer Fehlauswertung des ersten vorbestimmten Signals (DF17-30000 ft) die Flughindernisbefeuerung (3) eingeschaltet wird.

3. Verfahren nach einem der vorstehenden Ansprüche, **dadurch gekennzeichnet, dass** bei Empfang eines zweiten vorgegebenen Signals (DF17-100 ft) die Flughindernisbefeuerung (3) eingeschaltet wird.

4. Verfahren nach einem der vorstehenden Ansprüche, **dadurch gekennzeichnet, dass** eine zentrale Leitstelle (5) unter Vermittlung von Zwischenstationen an eine Mehrzahl von Sendestationen (7) vorgegebene Signale übermitteln kann, welche die Sendestationen zur Aussendung vorbestimmter Signale (DF17-30000 ft; DF17-100 ft) veranlassen.

5. Verfahren nach Anspruch 4, **dadurch gekennzeichnet, dass** die Mehrzahl der Sendestationen alle vorhandenen Sendestationen oder nach vorgebbaren Kriterien auswählbare Sendestationen umfasst.

6. Verfahren nach Anspruch 4 oder 5, **dadurch gekennzeichnet, dass** eine Störung des Signals der zentralen Leitstelle (5) die Zwischenstationen veranlasst, ein Signal zu den Sendestationen zu übertragen, das eine Abschaltung der Sendestationen oder eine Aussendung des zweiten vorgegebenen Signals bewirkt.

7. Verfahren nach einem der Ansprüche 4 bis 6, **dadurch gekennzeichnet, dass** bei einer Störung des Signals einer Zwischenstation die dieser Zwischenstation zugeordneten Sendestationen das zweite vorgegebene Signal aussenden.

8. Bauwerk (2) mit einer Flughindernisbefeuerung (3) und mit einem Empfänger (4), der mit einer Schalteinrichtung (S) für die Flughindernisbefeuerung (3) zusammenwirkt, **gekennzeichnet durch** eine Ansteuerung der schalteinrichtung (S) derart, dass bei Empfang eines ersten vorgegebenen Signals (DF17-Mode-S-Transpondersignals) **durch** den Empfänger (4) die Schalteinrichtung (S) die Flughindernisbefeuerung (3) ausschaltet, wobei das erste Signal (DF17-Mode-S-Transpondersignal) eine Orts- und/oder Höheninformation beinhaltet, bei der eine Kollision zwischen einem Luftfahrzeug und einer Windenergieanlage sicher ausgeschlossen ist.

9. Bauwerk nach Anspruch 8, **gekennzeichnet durch** eine Ansteuerung der Schalteinrichtung (S) derart, dass bei Störung des ersten vorgegebenen Signals die Schalteinrichtung (S) die Flughindernisbefeuerung (3) einschaltet.

10. Bauwerk nach Anspruch 8 oder 9, **gekennzeichnet durch** eine Ansteuerung der Schalteinrichtung (S) derart, dass bei Empfang eines zweiten vorgegebenen Signals durch den Empfänger (4) die Schalteinrichtung (S) die Flughindernisbefeuerung (3) einschaltet.

11. Bauwerk nach einem der Ansprüche 8 bis 10, **gekennzeichnet durch** eine Ausbildung als Winderiergieanlage.

12. Bauwerk nach Anspruch 8, **dadurch gekennzeichnet, dass** das Bauwerk über wenigstens eine Eingangstür verfügt, welche mit einem Schalter verbunden ist, welcher eine Hindernisbefeuerung des Bauwerks aktiviert, wenn die Eingangstür geöffnet wird.

## Claims

1. A method for controlling a flight obstacle lighting arrangement (3), wherein a receiver (4) cooperates with a switching device (S) for the flight obstacle light arrangement (3),
**characterised in that**, when a first predetermined signal (DF17-mode-S-transponder signal) is received, the receiver (4) controls the switching device in such a way that the flight obstacle lighting arrangement (3) is switched off, wherein the first signal (DF17-mode-S-transponder signal) includes altitude and/or location information, with which a collision between an aircraft and a wind power installation is reliably precluded.

2. A method according to claim 1, **characterised in that**, in the event of a fault with, an absence of or an incorrect evaluation of the first predetermined signal (DF17-30,000 ft), the flight obstacle lighting arrangement (3) is switched on.

3. A method according to one of the preceding claims, **characterised in that**, when a second predetermined signal (DF17-100 ft) is received, the flight obstacle lighting arrangement (3) is switched on.

4. A method according to any one of the preceding claims, **characterised in that** a central control station (5) is able to transmit predetermined signals by way of intermediate stations to a plurality of transmitting stations (7), which signals cause the transmitting stations to emit predetermined signals (DF17-30,000 ft; DF17-100 ft).

5. A method according to claim 4, **characterised in that** the plurality of transmitting stations includes all existing transmitting stations or transmitting stations that are selectable in accordance with predeterminable criteria.

6. A method according to claim 4 or claim 5, **characterised in that** a fault with the signal of the central control station (5) causes the intermediate stations to transmit a signal to the transmitting stations, which signal causes the transmitting stations to be shut down or to emit the second predetermined signal.

7. A method according to any one of claims 4 to 6, **characterised in that**, in the event of a fault with the signal of an intermediate station, the transmitting stations associated with that intermediate station emit the second predetermined signal.

8. A structure (2) having a flight obstacle lighting arrangement (3) and having a receiver (4) which cooperates with a switching device (S) for the flight obstacle light arrangement (3), **characterised by** actuation of the switching device (S) in such a way that, when a first predetermined signal (DF17-mode-S-transponder signal) is received by the receiver (4), the switching device (S) switches off the flight obstacle lighting arrangement (3), wherein the first signal (DF17-mode-S-transponder signal) includes location and/or altitude information, with which a collision between an aircraft and a wind power installation is reliably precluded.

9. A structure according to claim 8, **characterised by** actuation of the switching device (S) in such a way that, in the event of a fault with the first predetermined signal, the switching device (S) switches on the flight obstacle lighting arrangement (3).

10. A structure according to claim 8 or claim 9, **characterised by** actuation of the switching device (S) in such a way that, when a second predetermined signal is received by the receiver (4), the switching device (S) switches on the flight obstacle lighting arrangement (3).

11. A structure according to any one of claims 8 to 10, **characterised by** being in the form of a wind power installation.

12. A structure according to claim 8, **characterised in that** the structure has at least one entrance door which is connected to a switch that activates an obstacle light arrangement of the structure when the entrance door is opened.

## Revendications

1. Procédé servant à commander un balisage d'obstacle aérien (3), sachant qu'un récepteur (4) coopère avec un dispositif de commutation (S) pour le balisage d'obstacle aérien (3),
**caractérisé en ce que** le récepteur (4) commande le dispositif de commutation lors de la réception d'un premier signal (signal de transpondeur DF17-mode-S) prédéfini de telle manière que le balisage d'obstacle aérien (3) est mis hors service, dans lequel le premier signal (signal de transpondeur DF17-mode-S) comporte une information relative à la hauteur et/ou au lieu, pour laquelle une collision entre un avion et une éolienne est exclue avec fiabilité.

2. Procédé selon la revendication 1, **caractérisé en ce que** le balisage d'obstacle aérien (3) est mis en service en cas de perturbation, d'absence ou d' analyse erronée du premier signal (DF17-30000 pi) prédéterminé.

3. Procédé selon l'une quelconque des revendications précédentes, **caractérisé en ce que** le balisage d'obstacle aérien (3) est mis en service lors de la réception d'un deuxième signal (DF17-100 pi) prédéfini.

4. Procédé selon l'une quelconque des revendications précédentes, **caractérisé en ce qu'**un centre de contrôle (5) central peut transmettre des signaux prédéfinis par l'intermédiaire de stations intermédiaires à une pluralité de stations émettrices (7), lesquels signaux amènent les stations émettrices à envoyer des signaux prédéterminés (DF17-30000 pi ; DF17-100 pi) .

5. Procédé selon la revendication 4, **caractérisé en ce que** la pluralité de stations émettrices comprend toutes les stations émettrices présentes ou des stations émettrices pouvant être sélectionnées selon des critères pouvant être prédéfinis.

6. Procédé selon la revendication 4 ou 5, **caractérisé en ce qu'**une perturbation du signal du poste de contrôle (5) central amène les stations intermédiaires à transmettre un signal aux stations émettrices, lequel signal entraîne une mise hors service des stations émettrices ou un envoi du deuxième signal prédéfini.

7. Procédé selon l'une quelconque des revendications 4 à 6, **caractérisé en ce qu'**en cas d'une perturbation du signal d'une station intermédiaire, les stations émettrices associées à ladite station intermédiaire envoient le deuxième signal prédéfini.

8. Edifice (2) équipé d'un balisage d'obstacle aérien (3) et d'un récepteur (4), qui coopère avec un dispositif de commutation (S) pour le balisage d'obstacle aérien (3), **caractérisé par** une commande du dispositif de commutation (S) de telle manière qu'en cas de réception d'un premier signal (signal de transpondeur DF17-mode-S) prédéfini par le récepteur (4), le dispositif de commutation (S) met hors service le balisage d'obstacle aérien (3), dans lequel le premier signal (signal de transpondeur DF17-mode-S) comporte une information relative au lieu et/ou à la hauteur, pour laquelle une collision entre un aéronef et une éolienne est exclue avec fiabilité.

9. Edifice selon la revendication 8, **caractérisé par** une commande du dispositif de commutation (S) de telle manière qu'en cas de perturbation du premier signal prédéfini, le dispositif de commutation (S) met en service le balisage d'obstacle aérien (3).

10. Edifice selon la revendication 8 ou 9, **caractérisé par** une commande du dispositif de commutation (S) de telle manière qu'en cas de réception d'un deuxième signal prédéfini par le récepteur (4), le dispositif de commutation (S) met en service le balisage d'obstacle aérien (3).

11. Edifice selon l'une quelconque des revendications 8 à 10, **caractérisé par** une réalisation sous la forme d'une éolienne.

12. Edifice selon la revendication 8, **caractérisé en ce que** l'édifice dispose d'au moins une porte d'entrée, laquelle est reliée à un commutateur qui active un balisage d'obstacle aérien de l'édifice lorsque la porte d'entrée est ouverte.
